# EUROPÄISCHE PATENTSCHRIFT

(11) **EP 1 583 673 B1**
(45) Veröffentlichungstag und Bekanntmachung des Hinweises auf die Patenterteilung: **12.07.2006**
(21) Anmeldenummer: 03809977.6
(22) Anmeldetag: 30.12.2003
(51) Int. Cl.: B60J 5/04, B60J 1/18

(54) **FENSTERRAHMENTEIL, HERGESTELLT IM DRUCKGIESSVERFAHREN**
WINDOW FRAME ELEMENT PRODUCED BY INJECTION
ELEMENT CADRE DE FENETRE, PRODUIT PAR COULEE SOUS PRESSION

(30) Priorität: 13.01.2003 DE 10301042
(43) Veröffentlichungstag der Anmeldung: 12.10.2005
(73) Patentinhaber: ae group ag, 36179 Bebra-Iba (DE)
(72) Erfinder: GROV, Norbert, 26419 Schortens (DE)
(74) Vertreter: Lins, Edgar
(86) Internationale Anmeldenummer: PCT/DE2003/004257
(87) Internationale Veröffentlichungsnummer: WO 2004/065153

(56) Entgegenhaltungen:
- WO-A-02/096690
- DE-A- 4 008 111
- DE-A- 10 201 203

## Beschreibung

Die Erfindung betrifft ein Fensterrahmenteil, hergestellt im Druckgießverfahren mit einer Formgebung, die eine Hauptentformungsrichtung für Gießwerkzeugteile definiert, und versehen mit einer U-förmigen, im Wesentlichen senkrecht zur Hauptentformungsrichtung offenen Führung, die mit ihren Schenkeln zum beidseitigen Umfassen einer Kante einer entlang dem Fensterrahmenteil verschiebbaren Fensterscheibe eingerichtet ist. Solch ein Fensterrahmenteil ist beschrieben in DE4008111.

Derartige Fensterrahmenteile sind beispielsweise Bestandteile von Autotüren. Sie werden aus Gewichtsgründen aus Leichtmetall, insbesondere Aluminium, hergestellt und weisen aus Stabilitätsgründen eine Verrippung auf, die eine Hauptentformungsrichtung für die Gießwerkzeughälften senkrecht zu der durch die Fahrzeugtür aufgespannten Fläche definiert. Bei einer Fahrzeugtür sind somit die Rippen zum Fahrzeuginnenraum und Fahrzeugaußenraum gerichtet. Fahrzeugtüren weisen bekanntlich in Kopfhöhe Fensterausschnitte auf, in denen Fensterscheiben herunter kurbelbar geführt sind. Die Fensterrahmenteile sind somit mit Führungen versehen, die als U-förmige Schiene an dem im Druckgießverfahren hergestellten Fensterrahmenteil befestigt werden. Die Schiene wird in bekannter Weise mit einem Innenpolster versehen, an dem die Kante der Fensterscheibe gleiten kann.

Eine Herstellung der U-förmigen Schiene beim Druckgießen des Fensterrahmenteils würde den Einsatz eines Gießwerkzeugs erfordern, das außer den Gießwerkzeughälften einen Schieber beinhaltet, mit dem der Zwischenraum zwischen den Schenkeln der U-förmigen Schiene gewährleistet wird, da dieser Zwischenraum durch die in der Hauptentformungsrichtung bewegbaren Gießwerkzeugteile nicht ausgefüllt werden kann, da der Zwischenraum zwischen den Schenkeln in Hauptentformungsrichtung gesehen eine Hinterschneidung darstellt. Die Herstellung und der Einsatz eines derart komplizierten Gießwerkzeugs ist jedoch nicht wirtschaftlich, sodass in der Praxis die U-förmige Führung separat hergestellt und nachträglich an dem Fensterrahmenteil befestigt wird. Hierdurch entsteht ein unerfreulicher Montageaufwand.

Der vorliegenden Erfindung liegt die Problemstellung zugrunde, ein Fensterrahmenteil der eingangs erwähnten Art so auszubilden, dass eine rationellere Fertigung mit geringeren Fertigungskosten möglich ist.

Zur Lösung dieses Problems ist erfindungsgemäß ein Fensterrahmenteil der eingangs erwähnten Art dadurch gekennzeichnet, dass die Führung aus alternierend angeordneten Abschnitten der beiden Schenkel gebildet ist, die beim Druckgießen einstückig an das Fensterrahmenteil angeformt sind.

Für das erfindungsgemäße Fensterrahmenteil wird auf die bisher übliche durchgehend ausgebildete Führungsschiene verzichtet und die Führung so ausgebildet, dass sie aus abwechselnd auf der einen und auf der anderen Seite der Fensterscheibe angeordneten Führungsabschnitten besteht. Die Führung ist somit nicht im Querschnitt als U ausgebildet, sondern mit dem Boden der Führungsnut jeweils L-förmig, wobei die aufeinander folgenden L-Abschnitte jeweils spiegelbildlich zueinander angeordnet sind, sodass mit nachfolgenden Abschnitten abwechselnd die eine Seite und die andere Seite der Kante der Fensterscheibe geführt wird.

Durch diese Ausbildung der Führung können die Abschnitte der Führung beim Druckgießen des Fensterrahmenteils in einfacher und wirtschaftlicher Weise mit gebildet werden, da sich die Abschnitte mit den in Hauptentformungsrichtung bewegbaren Gießwerkzeugteilen herstellbar sind. Die Trennebene zwischen den beiden Gießwerkzeugteilen wird entsprechend mäanderförmig ausgebildet um die Kavitäten für die aufeinander folgenden Abschnitte der Führung zu bilden.

Zur Erleichterung der Entformung der Gießwerkzeugteile ist es vorteilhaft, wenn die alternierend angeordneten Abschnitte schmale Seitenkanten aufweisen, die auf einer Geraden miteinander fluchten, wobei die schmalen Seitenkanten vorzugsweise einen konischen Zwischenraum zwischen zwei Abschnitten eines Schenkels begrenzen. Dadurch ist es möglich, die mäanderförmig ausgebildete Trennebene mit konischen Mäandern auszubilden, die eine leichte Entformung ermöglichen. Der Konizitätswinkel liegt dabei vorzugsweise zwischen 10° und 45°, bevorzugt zwischen 30° und 40° und besonders bevorzugt bei 35° ± 2°.

Das erfindungsgemäße Fensterrahmenteil lässt sich besonders vorteilhaft als sogenannte A-Säule einer Fahrzeugtür ausbilden, also als das der A-Säule der Karosserie eines Fahrzeugs benachbarte Rahmenteil der Fahrzeugtür. In gleicher Weise kann die im Wesentlichen spiegelbildlich ausgeführte hintere Tür mit einem der C-Säule benachbarten erfindungsgemäßen Fensterrahmenteil ausgebildet sein.

Die Erfindung soll im Folgenden anhand eines in der Zeichnung dargestellten Ausführungsbeispiels näher erläutert werden. Es zeigen:
- Figur 1: eine Ansicht mit einem erfindungsgemäßen Fensterrahmenteil in Form einer A-Säule
- Figur 2: eine vereinfachte Seitenansicht des Fensterrahmenteils
- Figur 3: eine perspektivische Ansicht insbesondere auf die Führung des Fensterrahmenteils
- Figur 4: eine Draufsicht auf die Führung des Fensterrahmenteils
- Figur 5: ein Detail A der Darstellung gemäß Figur 4
- Figur 6: einen Schnitt entlang der Schnittlinie B-B in Figur 5.

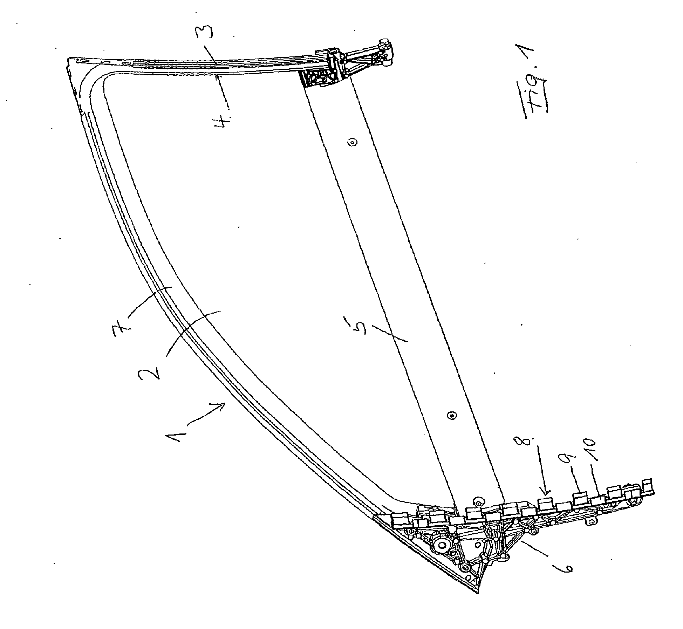

Figur 1 lässt eine Fahrzeugtür 1 erkennen, die einen Fensterausschnitt 2 aufweist. Der Fensterausschnitt ist an seiner Rückseite durch eine B-Säule 3 begrenzt, die mit einer hinteren Fensterführung 4 versehen ist. Ein Seitenholm 5 begrenzt die Unterkante des Fensterausschnitts 2 und verbindet die B-Säule 3 mit einem vorderen Pfosten 6, der die A-Säule der Fahrzeugtür 1 darstellt. Eine obere Begrenzung des Fensterausschnitts 2 erfolgt mit einem gebogenen Profilstück 7.

Die Säule 6 ist mit einer zum Fensterausschnitt 2 hin offenen Führung 8 versehen, die durch alternierend angebrachte Abschnitte 9, 10 gebildet ist. Die Führung 8 erstreckt sich bis unter den Fensterausschnitt 2, da die den Fensterausschnitt abdeckende Fensterscheibe in üblicher Weise herunterfahrbar ist und beim Herunterfahren in den Türbereich unterhalb des Fensterausschnitts 2 weitergeführt werden muss.

Die Figuren 2 bis 4 verdeutlichen den Pfosten 6 mit der durch die alternierend angebrachten Abschnitte 9, 10 gebildeten Führung 8.

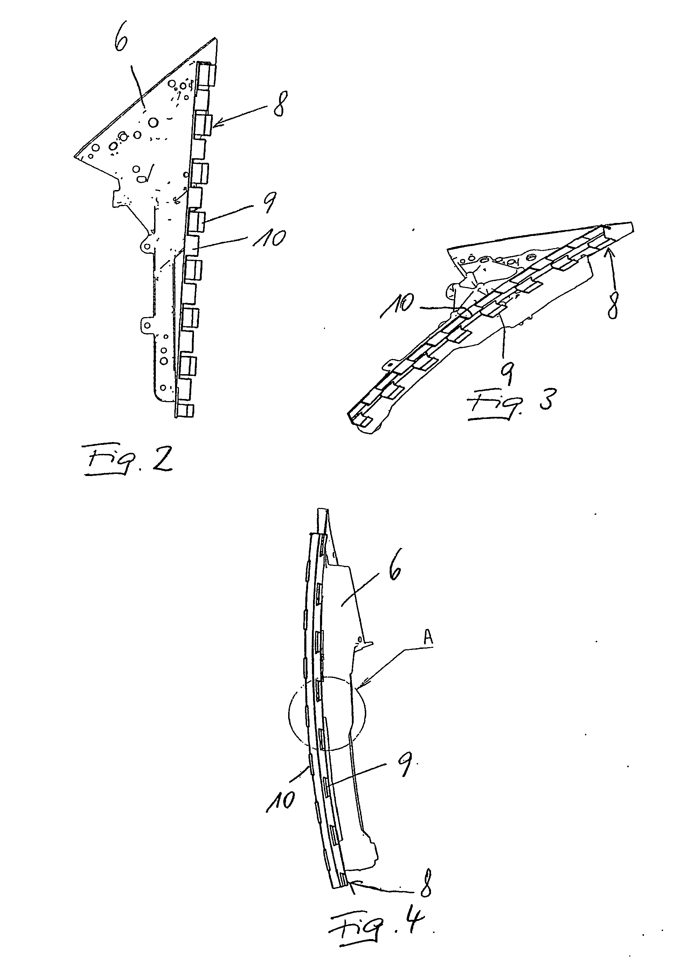

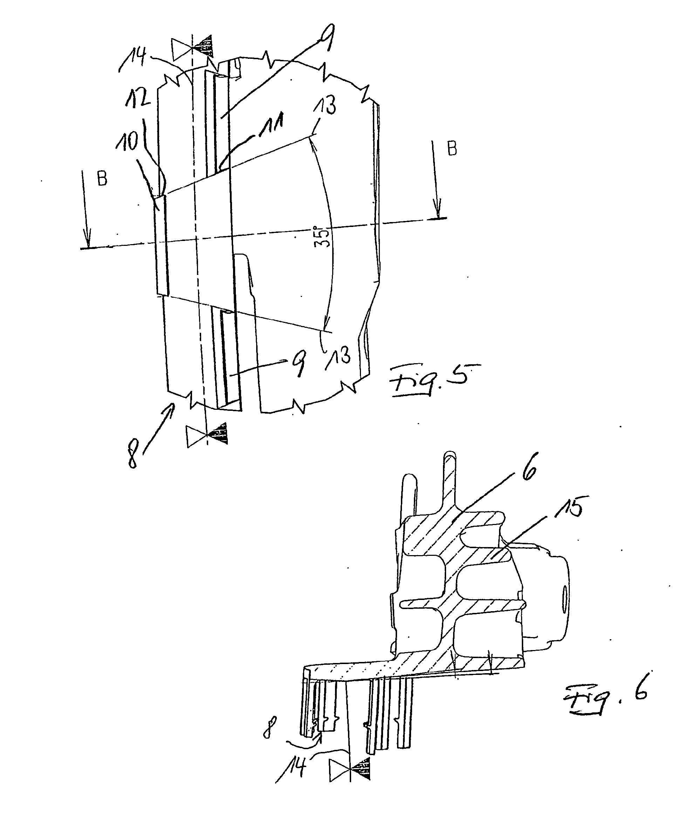

Das in Figur 5 dargestellte Detail zeigt zwei Abschnitte 9 eines Schenkels der Führung und einen dazwischen liegenden Abschnitt 10 des anderen Schenkels der Führung 8. Dabei ist verdeutlicht, dass die Abschnitte 9, 10 mit schmalen Seitenkanten 11, 12 versehen sind, die auf einer Geraden 13 liegen. Zwei Geraden 13 begrenzen dabei einen Zwischenraum zwischen zwei Abschnitten 9, der konisch ausgebildet ist und einen Konizitätswinkel von 35° aufweist. Die konische Ausbildung des Zwischenraums bedingt eine entsprechende konische Ausbildung der Mäanderform der Gießwerkzeugteile, deren Trennebene 14 außerhalb der Mäanderform in den Figuren 5 und 6 eingezeichnet ist. Die konische Ausbildung der Mäanderform erleichtert die Entformung erheblich.

Figur 6 verdeutlicht, dass der Pfosten 6 Rippen 15 aufweist, die die Entformungsrichtung (senkrecht zur Trennebene 14) der Gießwerkzeugteile definieren, da sie in die Hauptentformungsrichtung zeigen müssen. Figur 6 verdeutlicht, dass die Führung 8 mit der Hauptentformungsrichtung einen Winkel bildet und im Wesentlichen senkrecht zur Hauptentformungsrichtung steht. Die Führung 8 kann dennoch mit Hilfe der in der Hauptentformungsrichtung bewegbaren Gießwerkzeugteile gegossen werden, weil die Abschnitte 9, 10 senkrecht zur Hauptentformungsrichtung alternierend angeordnet sind und das Einfahren und Ausfahren eines entlang den Geraden 13 bewegbaren Mäanderteils der Gießwerkzeugteile ermöglicht.

Die erfindungsgemäß nicht durchgehende Ausbildung der Führung 8 beeinträchtigt die Funktionsfähigkeit nicht, da die Abschnitte 9, 10 eine ausreichende Stabilität der Führung 8 auf beiden Seiten der Kante der Fensterscheibe gewährleisten.

Durch die Anbringung der Führung 8 beim Druckgießen des Pfostens 6 ohne eine hierfür erforderliche Komplikation des Gießwerkzeugs durch Schieber o. dgl. erspart die bisher erforderlichen Montagearbeiten für die Anbringung einer separat hergestellten Führungsschiene an dem Pfosten 6.

## Patentansprüche

1. Fensterrahmenteil, hergestellt im Druckgießverfahren mit einer Formgebung, die eine Hauptentformungsrichtung für Gießwerkzeugteile definiert, und versehen mit einer U-förmigen, im Wesentlichen senkrecht zur Hauptentformungsrichtung offenen Führung (8), die mit ihren Schenkeln zum beidseitigen Umfassen einer Kante einer entlang dem Fensterrahmenteil verschiebbaren Fensterscheibe eingerichtet ist, **dadurch gekennzeichnet, dass** die Führung (8) aus alternierend angeordneten Abschnitten (9, 10) der beiden Schenkel gebildet ist, die beim Druckgießen einstückig an das Fensterrahmenteil angeformt sind.

2. Fensterrahmenteil nach Anspruch 1, **dadurch gekennzeichnet, dass** es einen Pfosten (6) bildet, der mit in die Hauptentformungsrichtung zeigenden Rippen (15) versehen ist.

3. Fensterrahmenteil nach Anspruch 1 oder 2, **dadurch gekennzeichnet, dass** die alternierend angeordneten Abschnitte (9, 10) schmale Seitenkanten (11, 12) aufweisen, die auf einer Geraden (13) miteinander fluchten.

4. Fensterrahmenteil nach Anspruch 3, **dadurch gekennzeichnet, dass** die schmalen Seitenkanten (11, 12) einen konischen Zwischenraum zwischen zwei Abschnitten (9; 10) eines Schenkels begrenzen.

5. Fensterrahmenteil nach Anspruch 4, **dadurch gekennzeichnet, dass** der Konizitätswinkel zwischen 10° und 45° liegt.

6. Fensterrahmenteil nach Anspruch 5, **dadurch gekennzeichnet, dass** der Konizitätswinkel zwischen 30° und 40° liegt.

7. Fensterrahmenteil nach Anspruch 6, **dadurch gekennzeichnet, dass** der Konizitätswinkel 35° ± 2° beträgt.

8. Fensterrahmenteil nach einem der Ansprüche 1 bis 7, **dadurch gekennzeichnet, dass** es als A-Säule oder C-Säule einer Autotür (1) ausgebildet ist.

## Claims

1. A window frame element produced by diecasting with a shaping defining a main demolding direction for casting mold parts, and provided with a U-shaped guide (8) which is open essentially perpendicularly with respect to the main demolding direction and is positioned by means of its limbs for grasping on both sides an edge of a window pane, which can be displaced along the window frame part, **characterized in that** the guide (8) is formed from sections (9, 10) of the two limbs that are arranged in an alternating manner and are molded integrally onto the window frame element during the diecasting.

2. The window frame element as claimed in claim 1, **characterized in that** it forms a post (6) which is provided with ribs (15) pointing in the main demolding direction.

3. The window frame element as claimed in claim 1 or 2, **characterized in that** the sections (9, 10) that are arranged in an alternating manner have narrow side edges (11, 12) which are aligned with each other on a straight line (13).

4. The window frame element as claimed in claim 3, **characterized in that** the narrow side edges (11, 12) bound a conical intermediate space between two sections (9; 10) of a limb.

5. The window frame element as claimed in claim 4, **characterized in that** the angle of conicity is between 10° and 45°.

6. The window frame element as claimed in claim 5, **characterized in that** the angle of conicity is between 30° and 40°.

7. The window frame element as claimed in claim 6, **characterized in that** the angle of conicity is 35° ± 2°.

8. The window frame element as claimed in one of claims 1 to 7, **characterized in that** it is designed as an A-pillar or C-pillar of a car door (1).

## Revendications

1. Elément de cadre de fenêtre produit par coulée sous pression comportant un façonnage qui définit une direction de formage principale pour des parties de l'outillage de coulée, et qui est pourvu d'un guidage (8) ouvert en forme de U sensiblement perpendiculaire à la direction de formage principale qui avec ses ailes est adapté pour entourer de chaque côté le bord d'une vitre coulissante le long de l'élément de cadre de fenêtre, **caractérisé en ce que** le guide (8) est constitué de sections (9, 10) des deux ailes disposées de façon alternée, qui lors de la coulée sous pression sont formées d'une seule pièce sur l'élément de cadre de fenêtre.

2. Elément de cadre de fenêtre selon la revendication 1, **caractérisé en ce qu'**il constitue un jambage qui est pourvu de nervures (15) dirigées dans la direction de formage principale.

3. Elément de cadre de fenêtre selon l'une des revendications 1 ou 2, **caractérisé en ce que** les sections (9, 10) disposées de façon alternée présentent des bords latéraux (11, 12) étroits qui affleurent ensemble avec une droite (13).

4. Elément de cadre de fenêtre selon la revendication 3, **caractérisé en ce que** les bords latéraux étroits (11, 12) délimitent un espace intermédiaire conique entre deux sections (9, 10).

5. Elément de cadre de fenêtre selon la revendication 4, **caractérisé en ce que** l'angle de la conicité est compris entre 10° et 45°.

6. Elément de cadre de fenêtre selon la revendication 5, **caractérisé en ce que** l'angle de la conicité est compris entre 30° et 40°.

7. Elément de cadre de fenêtre selon la revendication 6, **caractérisé en ce que** l'angle de la conicité est égal à 35° ± 2°.

8. Elément de cadre de fenêtre selon l'une des revendications 1 à 7, **caractérisé en ce qu'**il est constitué par un montant de type A ou par un montant de type C d'une porte (1) d'automobile.
